Europäisches Patentamt

European Patent Office

Office européen des brevets

(19)

(11) Veröffentlichungsnummer: **0 203 316**
**B1**

(12) # EUROPÄISCHE PATENTSCHRIFT

(45) Veröffentlichungstag der Patentschrift:
31.01.90

(51) Int. Cl.⁴: **B 04 B 1/06**

(21) Anmeldenummer: 86104524.3

(22) Anmeldetag: 03.04.86

(54) **Verfahren und Vorrichtung zum Abscheiden von Metallen und von anderen Feststoffen aus Flüssigkeiten.**

(30) Priorität: 11.05.85 DE 3517148

(43) Veröffentlichungstag der Anmeldung:
03.12.86 Patentblatt 86/49

(45) Bekanntmachung des Hinweises auf die Patenterteilung:
31.01.90 Patentblatt 90/5

(84) Benannte Vertragsstaaten:
AT BE CH FR GB IT LI LU NL SE

(56) Entgegenhaltungen:
DE-B- 1 149 302
DE-B- 1 158 452

(73) Patentinhaber: Abel, Günther, Herrenkellergasse 18,
D-7900 Ulm (DE)
Patentinhaber: Seefelder, Josef, Marktstrasse 20,
D-8965 Wertach/Allgäu (DE)

(72) Erfinder: Abel, Günther, Herrenkellergasse 18,
D-7900 Ulm (DE)

(74) Vertreter: Patentanwälte Dipl.-Ing. Rudolf Bibrach
Dipl.-Ing. Elmar Rehberg, Postfach 1453 Pütterweg 6,
D-3400 Göttingen (DE)

**Beschreibung**

Die Erfindung bezieht sich auf ein Verfahren zum Abscheiden von Metallen und von anderen Feststoffen aus Flüssigkeiten, in dem das Feststoff-Flüssigkeitsgemisch chargenweise unter Zentrifugalkrafteinwirkung gesetzt wird und die festen und flüssigen Bestandteile des Feststoff-Flüssigkeitsgemisches getrennt voneinander abgezogen werden. Die Erfindung betrifft gleichzeitig eine Vorrichtung zur Durchführung dieses Verfahrens mit einer um eine vertikale Achse angetriebenen, einen Separierungsraum einschließenden Wandung und einem zentral angeordneten Beschickungsrohr, wobei die den Separierungsraum umschließende Wandung radial geschlossen ausgebildet ist. In der Abwasser- und Klärtechnik, aber auch bei industriellen Betrieben und in der Landwirtschaft fallen Feststoff-Flüssigkeitsgemische als Abwässer an, wobei diese Abwässer einerseits Metalle und andererseits vergleichsweise leichtere Feststoffe, Schlämme und anderes enthalten können.

Die Trennung von Feststoff-Flüssigkeitsgemischen in dem Feststoff einerseits und den Flüssigkeiten andererseits geschieht unter anderem mit Zentrifugen, die in verschiedenen Bauarten bekannt sind. Dabei kann die Wandung der Zentrifuge siebartig ausgebildet oder anderweitig durchbrochen sein, um die flüssigen Bestandteile des Feststoff-Flüssigkeitsgemisches hindurchtreten zu lassen und die Feststoffe zurückzubehalten. Durch die Abfuhr des Filtratwassers nach außen bleiben die Feststoffe im Innern der Zentrifuge zurück, wobei ein Gemisch verschiedener Feststoffe anfällt. Auch Vollmantelzentrifugen, deren den Separierungsraum einschließende Wandung radial geschlossen ausgebildet ist, sind bekannt (DE-A-1 158 452 oder DE-A-1 149 302).

Der Erfindung liegt die Aufgabe zugrunde, ein Verfahren und eine Vorrichtung der eingangs beschriebenen Art derart weiterzubilden, daß Metalle, also insbesondere Schwermetalle oder Buntmetalle getrennt von den übrigen Feststoffen, z.B. Schlämmen, insbesondere Klärschlamm, wie Frisch-, Belebt- und Faulschlamm, abgeschieden werden können. Dabei kommt es darauf an, ohne Bindemittel oder Trenn- und Flockungsmittel zu arbeiten.

Diese Aufgabe wird dadurch gelöst, daß das unter Zentrifugalkrafteinwirkung stehende Feststoff-Flüssigkeitsgemisch durch axial verschiebbare Trennwände unterteilt und die einzelnen Bestandteile aus den so gebildeten Kammern getrennt voneinander abgezogen werden. Zunächst wird das Feststoff-Flüssigkeitsgemisch als Ganzes chargenweise und ohne daß zunächst das Filtratwasser entfernt wird, unter Zentrifugalkrafteinwirkung gebracht. Dadurch findet eine Anlagerung und Verteilung der Bestandteile an der Wandung der Zentrifuge, also eine Separierung in radialer Richtung statt, wobei die schwersten Bestandteile, also die Schwermetalle unmittelbar an der Wandung der Zentrifuge abgeschieden werden, während sich die leichteren Bestandteile auf einem jeweils kleineren Radius befinden. Wenn die Separierung der einzelnen Bestandteile infolge der Zentrifugalkrafteinwirkung erreicht ist, werden die einzelnen Bestandteile durch axial verschiebbare Trennwände während ihrer Rotation voneinander abgeteilt, so daß letztendlich die einzelnen Bestandteile aus den so gebildeten Kammern abgezogen werden können. Die Größe der Zentrifugalkraft kann über die jeweils anzuwendenden Drehzahlen gesteuert werden. Durch die Breite der Kammern kann auch die stoffliche Zusammensetzung der festen Bestandteile in den einzelnen Kammern abgestellt werden. Die einzelnen Bestandteile werden nach ihrer kammerartigen Trennung in vorteilhafter Ausgestaltung durch eine axiale Förderung abgezogen. Auch zu diesem Zeitpunkt kann die Zentrifugalkraft noch auf die einzelnen Bestandteile einwirken.

Diese Aufgabe wird auch dadurch gelöst, daß konzentrisch zu der Achse der Wandung zylindermantelförmige Trennwände vorgesehen und axial in den Separierungsraum hinein verschiebbar angeordnet sind. Es versteht sich, daß der Separierungsraum auch stirnseitig geschlossen ausgebildet ist, daß also die den Separierungsraum umschließende Wandung axial nur eine bestimmte Baulänge aufweist. Die eine Stirnseite der Wandung kann direkt durchgehend und mit der Zylindermantelwandung einteilig ausgebildet sein. Die andere Stirnwand ist in der Regel verschließbar ausgebildet, jedoch ist der Separierungsraum von dieser Seite her zugänglich, da die zylindermantelförmigen Trennwände von hier eingeschoben werden müssen. Sinnvoll ist es, die Rotationsachse der Zentrifuge senkrecht anzuordnen, um die Zentrifugalkraft in der entsprechenden Richtung unabhängig von Schwerkrafteinflüssen zur Wirkung kommen zu lassen. Der Separierungsraum kann oben oder unten dauerhaft geschlossen ausgebildet sein.

Die zylindermantelförmigen Trennwände sind in vorteilhafter Ausgestaltung durch wendelartige Förderflächen miteinander verbunden, wobei für die Trennwände ein Rotationsantrieb um die vertikale Achse vorgesehen ist. Wenn beispielsweise das Feststoff-Flüssigkeitsgemisch in metallische Bestandteile, in vergleichsweise leichtere Feststoffe und in Flüssigkeit, also insgesamt in drei verschiedene Bestandteile unterteilt werden soll, sind zwei zylindermantelförmige Trennwände erforderlich. Je nach der prozentualen Zusammensetzung des zu unterteilenden Feststoff-Flüssigkeitsgemisches werden die zylindermantelförmigen Trennwände auf unterschiedlichem Radius relativ zu dem Durchmesser der den Separierungsraum einschließenden Wandung angeordnet. Es versteht sich, daß auch der Separierungsraum und damit das Feststoff-Flüssigkeitsgemisch auch in eine andere Anzahl von Bestandteilen unterteilt werden kann.

Für die axiale Verschiebung der Trennwände ist in weiterer vorteilhafter Ausgestaltung ein separater Antrieb in Verbindung mit einer Spindel vorgesehen. Eine Spindel gestattet in Verbindung mit einer Mutter eine sehr einfache Realisierung.

Weiter kann die den Separierungsraum umschließende Wandung glockenartig ausgebildet und oberhalb der Trennwände angeordnet sein, wobei die Trennwände von einem Gehäusemantel umgeben sind, der an die Wandung anschließt. Es ist aber auch möglich, die gesamte Vorrichtung gleichsam auf den Kopf zu stellen und den Separierungsraum topfartig, also unten geschlossen, anzuordnen. Es versteht sich, daß die Trennwände dann von oben her nach unten in den Separierungsraum einfahrbar ausgebildet sein müssen.

Der Gehäusemantel, der die Trennwände umgibt, ist zweckmäßig auf einer sich radial erstreckenden Grundplatte aufgebaut, die Grundplatte weist stillstehende Trennwandabschnitte sowie Abzugsöffnungen für die separierten Bestandteile des Feststoff-Flüssigkeitsgemisches auf. Durch diese Abzugsöffnungen werden die Bestandteile axial ausgetrieben.

Das zentrale Beschickungsrohr kann zweckmäßig in der glockenartigen Wandung axial verschiebbar gelagert sein. Die Beschickung der Vorrichtung mit der zu trennenden Charge kann in der Weise vorgenommen werden, daß unmittelbar während des Einbringens des Feststoff-Flüssigkeitsgemisches durch das Beschickungsrohr bereits eine Verteilung in axialer Richtung vorgenommen wird. Über ein Sichttiefenmeßgerät kann die Ringbreite der abzuscheidenden Feststoffe überwacht werden.

Der Rotationsantrieb für die Trennwände ist zweckmäßig umkehrbar ausgebildet. Dadurch können die Trennwände nach Art eines Fräskopfes in das Feststoff-Flüssigkeitsgemisch, welches unter Zentrifugalkrafteinwirkung steht, einfahren. Nach dem Abzug der Bestandteile werden die Trennwände aus dem Separierungsraum wieder herausgefahren, so daß eine neue Charge Feststoff-Flüssigkeitsgemisch eingebracht werden kann.

Die Trennwände können an ihrem dem Separierungsraum zugekehrten Ende zugespitzt ausgebildet oder mit einer Schneideinrichtung versehen sein. Die Schneideinrichtung kann auch Zahnform aufweisen. Während des axialen Einfahrens der Trennwände soll die radiale Aufteilung der Feststoffe nicht gestört oder aufgeschoben werden. Für Feststoffe in der Nähe der Wandung, die dort durch die Zentrifugalkraft auf einem vergleichsweise großen Radius besonders fest angepreßt werden, ist eine schneidende Bewegung der Trennwände sinnvoll und erforderlich.

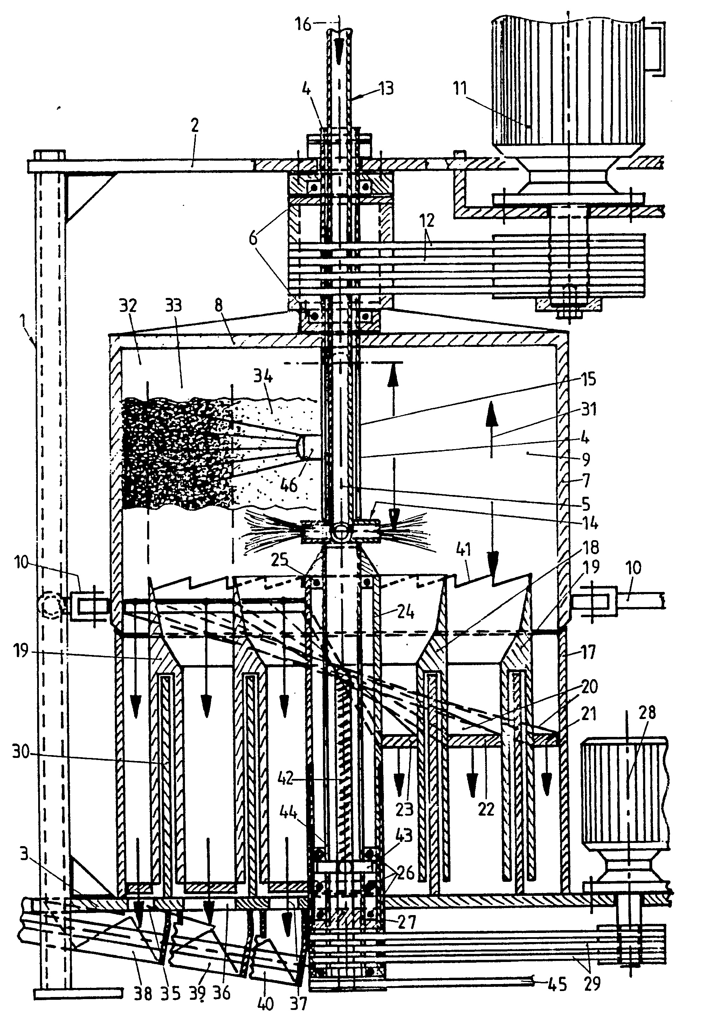

Ein Ausführungsbeispiel der Erfindung ist in der Zeichnung dargestellt und wird nachstehend näher erläutert. Die Zeichnung zeigt einen Vertikalschnitt durch die wesentlichen Teile der Vorrichtung.

In einem rahmenartigen Gestell 1 ist zwischen einer oberen Grundplatte 2 und einer unteren Grundplatte 3 ein Standrohr 4 ortsfest gelagert, welches zugleich eine vertikale Achse 5 bildet. Das Standrohr 4 dient in vielfältiger Weise der Lagerung der Einzelteile. Zunächst ist einmal mit Hilfe von Lagern 6 eine glockenartige Wandung 7, die geschlossen ausgebildet ist, drehbar gelagert. Die Wandung 7 ist oben durch die Stirnwand 8 geschlossen, während sie im unteren Bereich offen ist. Die Wandung 7 schließt einen Separierungsraum 9 ein, der wie die Wandung 7 zylinderförmig bzw. walzenförmig ausgebildet ist. Lager 10 ergänzen die Lager 6 für die Wandung 7. Zum Antrieb der Wandung 7 dient ein Motor 11, der in seiner Drehzahl regelbar ausgebildet ist. Wie ersichtlich, wird der Drehantrieb über Keilriemen 12 übertragen.

In das Standrohr 4 erstreckt sich von oben her ein Beschickungsrohr 13, welches in einem Kreuzkopf 14 endet. Das Standrohr 4 weist langlockartige Schlitze 15 auf, so daß das Beschickungsrohr 13 mit dem Kreuzkopf 14 höhenverstellbar in den Separierungsraum 9 einragt. Das Feststoff-Flüssigkeitsgemisch wird gemäß Pfeil 16 in das Beschickungsrohr 13 eingebracht und gelangt über den Kreuzkopf 14 in den Separierungsraum 9. Durch ein Verfahren des Beschickungsrohres 13 nach oben oder unten, also in Richtung der Achse 5, kann auf eine Verteilung des Feststoff-Flüssigkeitsgemisches entlang der vertikalen Innenwandung der Wandung 7 Einfluß genommen werden.

Im unteren Bereich schließt an die Wandung 7 ein Gehäusemantel 17 an, der stillstehend auf der Grundplatte 3 aufgebaut ist und in seinem Innern zylindermantelförmige Trennwände 18 und 19 aufnimmt, deren Durchmesser jedenfalls kleiner als der Innendurchmesser des Gehäusemantels 17 ist und deren Durchmesserstufung auf das jeweilige Feststoff-Flüssigkeitsgemisch abgestimmt ist. Die Anzahl der Trennwände 18, 19 kann unterschiedlich sein, je nach dem vorgesehenen Anwendungsfall. Die Trennwände 18 und 19 sind über Förderflächen 20 von Wendeln 21, 22, 23 miteinander verbunden. Die äußere Wendel 21 sitzt an der Trennwand 19. Die Wendel 22 verbindet die beiden Trennwände 18 und 19. Die Wendel 23 verbindet die Trennwand 18 mit einem Lagerrohr 24, welches mit Hilfe der Lager 25 und 26 drehbar auf dem Standrohr 4 gelagert ist. Das Lagerrohr 24 ist aus zwei Teilen gebildet, von denen das obere Teil axial verschieblich angeordnet ist, während das untere Teil 27 drehbar, aber axial nicht verschieblich angeordnet ist. Es ist ein Rotationsantrieb 28 für die Trennwände 18 und 19 vorgesehen, der über Keilriemen 29 übertragen wird. Wie ersichtlich, ist damit die gesamte Einrichtung aus den Trennwänden 18 und 19 und den Wendeln 21, 22 und 23 drehbar angetrieben, wobei die Drehrichtung umkehrbar ausgebildet ist und die Drehzahl gesteuert werden kann. Auf der unteren Grundplatte 3 sind Trennwandabschnitte 30, ebenfalls zylindermantelförmig ausgebildet, angeordnet, die stillstehend vorgesehen sind und die Trennwände 18 und 19 ergänzen.

Die Trennwände 18 und 19 sowie die Wendeln 21, 22 und 23 bilden insgesamt einen axial verschiebbaren Fräskopf, der gemäß Pfeil 31 in den Separierungsraum 9 eingefahren werden kann, wobei dort der Separierungsraum 9 damit in drei Kammern 32, 33, 34 unterteilt wird. Dabei ist die Drehrichtung des Fräskopfes so gewählt, daß die Wendeln 21, 22 und 23 eine Förderwirkung auf die einzelnen Bestandteile des Feststoff-Flüssigkeitsgemisches ausüben, so daß diese Bestandteile nach unten gefördert werden und separat über Abzugsöffnungen 35, 36 und 37 abgeführt werden, wobei Schneckenförderer 38, 39, 40 jeweils anschließend vorgesehen sind. Die dem Separierungsraum 9 zugekehrten freien Enden der Trennwände 18 und 19 können zugespitzt ausgebildet sein oder mit einer Schneideinrichtung 41, z.B. in Zahnform, versehen sein. Zur Axialverschiebung der Trennwände 18, 19 unter drehendem Antrieb ist im Innern des Standrohres 4 eine Spindel 42 drehbar, aber axial nicht verschiebbar, gelagert. Auf der Spindel bewegt sich gegen Verdrehung gesichert in axialer Richtung eine Mutter 43, die durch Langlöcher 44 des Standrohres 4 hindurchgreift und an dem Lagerrohr bzw. dessen oberem Teil, im Sinne einer Axialverstellung angreift. Dabei bleibt der untere Teil 27 des Lagerrohres axial in Ruhe. Die Lagerrohrteile stehen über einen hier nicht dargestellten Mitnehmer in Drehverbindung. Für die Axialverstellung, also die Verdrehung der Spindel, ist ein gesonderter Antrieb 45 vorgesehen, der hier nur angedeutet ist.

Mit dem Kreuzkopf 14 oder dem Beschickungsrohr 13 kann ein Sichttiefenmesser 46 verbunden sein, der es gestattet, die Dicke der an der Innenwandung der Wandung 7 abgelegten Feststoffschicht zu beurteilen.

Die Vorrichtung wird wie folgt betrieben:

Zunächst einmal wird der Motor 11 in Tätigkeit gesetzt und damit die glockenartige Wandung 7 in Rotation versetzt. Auch der Rotationsantrieb 28 wird eingeschaltet, wobei die Trennwände 18 und 19 sich in der dargestellten, aus dem Separierungsraum 9 ausgefahrenen Stellung, befinden. Die Drehrichtung des Rotationsantriebes 28 ist so gerichtet, daß das obere Ende der Wendeln 21, 22 und 23 gleichsam einen Abschluß für den Separierungsraum 9 nach unten bildet. Es wird nun das Feststoff-Flüssigkeitsgemisch durch das Beschickungsrohr 13 gemäß Pfeil 16 eingebracht, wobei während dieses chargenweisen Einbringens das Beschickungsrohr 13 axial entsprechend der Länge der Schlitze 15 verfahren werden kann, um eine gleichmäßige Belegung der Innenwand der Wandung 7 zu erreichen. Das Feststoff-Flüssigkeitsgemisch möge beispielsweise aus Feststoffen in Form von Metallen, Feststoffen in Form von Klärschlamm und dem Filtratwasser bestehen. Durch die infolge des Drehantriebes der Wandung 7 auf das Feststoff-Flüssigkeitsgemisch übertragene Zentrifugalkraft wird eine Separierung der einzelnen Bestandteile im Separierungsraum 9 dergestalt sich einstellen, daß sich in der Kammer 32, also unmittelbar benachbart an der Innenwandung der Wandung 7, sich die schwersten Bestandteile, also die Metalle, anlagern, während in der Kammer 33 sich vorzugsweise der Schlamm aufhält, und die Kammer 34 weitgehend nur Filtratwasser enthält. Es versteht sich, daß zu diesem Zeitpunkt die Kammer 32, 33 und 34 noch miteinander in Verbindung stehen, also insgesamt den Separierungsraum 9 bilden, der noch nicht unterteilt ist. Durch Steigerung der Drehzahl der Wandung 7 entweder stufenlos oder in Stufen kann die Separierungswirkung im Separierungsraum 9 begünstigt oder vervollständigt werden. Eine Kontrolle mit Hilfe des Sichttiefenmessers 46 führt bei ordnungsgemäßer Ablagerung in der gewünschten Schichtdicke zur Beendigung des Beschickungsvorganges. Dabei verbleibt die Wandung 7 unter erhöhtem Drehzahleinfluß, so daß sich der Inhalt des Separierungsraumes 9 nach unten nicht entleeren kann. Es wird nun die Drehrichtung des Rotationsantriebes 28 umgekehrt, wobei ein Teil des in der gedachten Kammer 34 befindlichen Filtratwassers bereits Gelegenheit hat, nach unten über die Wendel 21 abzulaufen und über die Abzugsöffnung 37 in den Schneckenförderer 40 überzutreten. Es wird nun der Antrieb 45 für die Axialverstellung des Fräskopfes bzw. der Trennwände 18 und 19 eingeschaltet, wodurch die Spindel in einem solchen Drehsinne in Umdrehung versetzt wird, daß die Mutter 43 aufwärts auf ihr reitet und damit über das Lagerrohr 24 die Trennwände 18 und 19 mitnimmt. Dabei schneiden die vorderen Enden der Trennwände 18 und 19 mit ihren Schneideinrichtungen 41 gleichsam die Kammern 32, 33 und 34 des Separierungsraumes 9 an und die dort separierten Bestandteile werden gleichsam aus dieser Zentrifuge herausgefräst. Es versteht sich, daß in der Kammer 32 die schweren Bestandteile, also die Metalle, anfallen, während die Kammer 33 den Schlamm enthält, der durch die Zentrifugalkraft auch bis zu gewissem Prozentsatz entwässert ist. Dieses Ausfräsen des Separierungsraumes 9 führt dazu, daß die Wendel 21 die Metalle nach unten aus der Abzugsöffnung 35 herausfördert, von wo sie in den Schneckenförderer 38 gelangen. Der Schlamm wird über die Wendel 22 nach unten gefördert und gelangt über die Abzugsöffnung 36 in den Schneckenförderer 39. Durch eine entsprechend hohe Drehzahl der Wandung 7 kann auch eine Verdichtungswirkung des Feststoffgehaltes stattfinden, z.B. von ca. 6 bis 10% auf ca. 15 bis 25%. Nachdem die Bestandteile des Feststoff-Flüssigkeitsgemisches mit Hilfe der Trennwände 18 und 19 und der Wendeln 21, 22 und 23 abgefräst bzw. entfernt sind, wird der Fräskopf wieder in die in der Zeichnung dargestellte Ausgangsposition axial zurückbewegt, seine Drehrichtung umgekehrt und es kann ein erneuter chargenweiser Beschickungsvorgang des nun leeren Separierungsraumes 9 erfolgen. Man erkennt, wie die Trennwandabschnitte 30 bei dieser Axialbewegung der Trennwände 18 und 19 diese ergänzen und dafür sorgen, daß auch unterhalb der Kammern 32, 33, 34 die separierten Bestandteile getrennt voneinander gefördert werden.

Die Vorrichtung kann in der dargestellten Weise angeordnet sein und betrieben werden. Es ist aber auch möglich, die Vorrichtung gleichsam auf den Kopf zu stellen, so daß die Wandung 7 mit der Stirnwand 8 gleichsam topfartig angeordnet ist und die Beschickung dann von unten erfolgt. Dann kann infolge Einwirkens der Schwerkraft während der Beschickung der dann oben angeordnete Fräskopf stillstehen oder muß allenfalls nur mit einer vergleichsweise geringen Drehzahl angetrieben werden. Ansonsten ist die Betriebsweise analog.

*Bezugszeichenliste:*

1 = Gestell
2 = obere Grundplatte
3 = untere Grundplatte
4 = Standrohr
5 = Achse
6 = Lager
7 = Wandung
8 = Stirnwand
9 = Separierungsraum
10 = Lager
11 = Motor
12 = Keilriemen
13 = Beschickungsrohr
14 = Kreuzkopf
15 = Schlitz
16 = Pfeil

17 = Gehäusemantel
18 = Trennwand
19 = Trennwand
20 = Förderfläche
21 = Wendel
22 = Wendel
23 = Wendel
24 = Lagerrohr
25 = Lager
26 = Lager
27 = unteres Teil
28 = Rotationsantrieb
29 = Keilriemen
30 = Trennwandabschnitte
31 = Pfeil
32 = Kammer
33 = Kammer
34 = Kammer
35 = Abzugsöffnung
36 = Abzugsöffnung
37 = Abzugsöffnung
38 = Schneckenförderer
39 = Schneckenförderer
40 = Schneckenförderer
41 = Schneideinrichtung
42 = Spindel
43 = Mutter
44 = Langlöcher
45 = Antrieb
46 = Sichttiefenmesser

**Patentansprüche**

1. Verfahren zum Abscheiden von Metallen und von anderen Feststoffen aus Flüssigkeiten, in dem das Feststoff-Flüssigkeitsgemisch chargenweise unter Zentrifugalkrafteinwirkung gesetzt wird und die festen und flüssigen Bestandteile des Feststoff-Flüssigkeitsgemisches getrennt voneinander abgezogen werden, dadurch gekennzeichnet, daß das unter Zentrifugalkrafteinwirkung stehende Feststoff-Flüssigkeitsgemisch durch axial verschiebbare Trennwände (18, 19) unterteilt und die einzelnen Bestandteile aus den so gebildeten Kammern (32, 33, 34) getrennt voneinander abgezogen werden.

2. Verfahren nach Anspruch 1, dadurch gekennzeichnet, daß die einzelnen Bestandteile nach ihrer kammerartigen Trennung durch eine axiale Förderung abgezogen werden.

3. Vorrichtung zur Durchführung des Verfahrens nach Anspruch 1 oder 2, mit einer um eine vertikale Achse (5) angetriebenen, einen Separierungsraum (9) einschließenden Wandung (7) und einem zentral angeordneten Beschickungsrohr (13), wobei die den Separierungsraum (9) umschließende Wandung (7) radial geschlossen ausgebildet ist, dadurch gekennzeichnet, daß konzentrisch zu der Achse (5) der Wandung (7) zylindermantelförmige Trennwände (18, 19) vorgesehen und axial in den Separierungsraum (9) hinein verschiebbar angeordnet sind.

4. Vorrichtung nach Anspruch 3, dadurch gekennzeichnet, daß die zylindermantelförmigen Trennwände (18, 19) durch wendelartige Förderflächen (20) miteinander verbunden sind und daß ein Rotationsantrieb (28) für die Trennwände (18, 19) um die vertikale Achse (5) vorgesehen ist.

5. Vorrichtung nach Anspruch 3 oder 4, dadurch gekennzeichnet, daß für die axiale Verschiebung der Trennwände (18, 19) ein separater Antrieb (45) in Verbindung mit einer Spindel vorgesehen ist.

6. Vorrichtung nach einem der Ansprüche 3 bis 5, dadurch gekennzeichnet, daß die den Separierungsraum (9) umschließende Wandung (7) glockenartig ausgebildet und oberhalb der Trennwände (18, 19) angeordnet ist und daß die Trennwände (18, 19) von einem Gehäusemantel (17) umgeben sind, der an die Wandung (7) anschließt.

7. Vorrichtung nach Anspruch 6, dadurch gekennzeichnet, daß der Gehäusemantel (17) auf einer sich radial erstreckenden Grundplatte (3) aufgebaut ist und daß die Grundplatte (3) stillstehende Trennwandabschnitte (30) sowie Abzugsöffnungen (35, 36, 37) für die separierten Bestandteile des Feststoff-Flüssigkeitsgemisches aufweist.

8. Vorrichtung nach Anspruch 6 oder 7, dadurch gekennzeichnet, daß das zentrale Beschickungsrohr (13) in der glockenartigen Wandung (7) axial verschiebbar gelagert ist.

9. Vorrichtung nach einem der Ansprüche 3 bis 8, dadurch gekennzeichnet, daß der Rotationsantrieb (28) für die Trennwände (18, 19) umkehrbar ausgebildet ist.

10. Vorrichtung nach einem der Ansprüche 3 bis 9, dadurch gekennzeichnet, daß die Trennwände (18, 19) an ihrem dem Separierungsraum (9) zugekehrten Ende zugespitzt ausgebildet oder mit einer Schneideinrichtung versehen sind.

11. Vorrichtung nach Anspruch 10, dadurch gekennzeichnet, daß die Schneideinrichtung Zahnform aufweist.

**Claims**

1. Process for separating metals and other solids from liquids, in which the solid/liquid mixture is put in batches under the effect of a centrifugal force and the solid and liquid constituents of the solid/liquid mixture are drawn of separately from one another, characterized in that the solid/liquid mixture under the effect of centrifugal force is subdivided by means of axially displaceable partition walls (18, 19), and the individual constituents are drawn off separately from one another out of the compartments (32, 33, 34) so formed.

2. Process according to Claim 1, characterized in that the individual constituents, after their compartmentalized separation, are drawn off through an axial conveyance.

3. Apparatus for carrying out the process according to Claim 1 or 2, with a casing (7) driven about a vertical axis (5) and enclosing a separating space (9) and with a centrally arranged feed pipe (13), the casing (7) enclosing the separating space (9) being made radially closed, characterized in that partition walls (18, 19) in the form of a cylinder jacket are provided concentrically relative to the axis (5) of the casing (7) and are arranged so as to be displaceable axially into the separating space (9).

4. Apparatus according to Claim 3, characterized in that the partition walls (18, 19) in the form of a cylinder jacket are connected to one another by means of helical conveying surfaces (20), and in that a rotary drive (28) is provided for the partition walls (18, 19) about the vertical axis (5).

5. Apparatus according to Claim 3 or 4, characterized in that a separate drive (45) in conjunction with a spindle is provided for the axial displacement of the partition walls (18, 19).

6. Apparatus according to one of Claims 3 to 5, characterized in that the casing (7) enclosing the separating space (9) is made bell-like and is arranged above the partition walls (18, 19), and in that the partition walls (18, 19) are surrounded by a housing jacket (17) which adjoins the casing (7).

7. Apparatus according to Claim 6, characterized in that the housing jacket (17) is mounted on a radially extending baseplate (3), and in that the baseplate (3) has stationary partition-wall portions (30) and draw-off ports (35, 36, 37) for the separated constituents of the solid/liquid mixture.

8. Apparatus according to Claim 6 or 7, characterized in that the central feed pipe (13) is mounted axially displaceably in the bell-like casing (7).

9. Apparatus according to Claims 3 to 8, characterized in that the rotary drive (28) for the partition walls (18, 19) is made reversible.

10. Apparatus according to one of Claims 3 to 9, characterized in that the partition walls (18, 19), at their end facing the separating space (9), are made tapered to a point or are equipped with a cutting device.

11. Apparatus according to Claim 10, characterized in that the cutting device has a toothed form.

## Revendications

1. Procédé de séparation pour éliminer des métaux et autres solides dans des liquides, dans lequel le mélange de solides et de liquide est déposé en charges successives soumises à la force centrifuge et les constituants solides et liquides du mélange de solides et de liquide sont soutirés séparément, caractérisé en ce que le mélange de solides et de liquide soumis à la force centrifuge est subdivisé par des cloisons séparatrices (18, 19) pouvant coulisser axialement et en ce que les constituants du mélange sont soutirés séparément hors des chambres (32, 33, 34) ainsi formées.

2. Procédé selon la revendication 1, caractérisé en ce que les divers constituants sont soutirés par un transport axial après leur séparation dans des chambres séparées.

3. Dispositif de mise en oeuvre du procédé selon la revendication 1 ou 2, avec une paroi (7) entraînée autour d'un axe vertical (5), cette paroi renfermant une chambre de séparation (9), et avec un tube d'alimentation (13) disposé en position centrale, la paroi (7) renfermant la chambre de séparation (9) étant fermée dans le sens radial, caractérisé en ce que sont prévues des cloisons séparatrices (18, 19) en forme d'enveloppes cylindriques, concentriquement à l'axe (5) de la paroi (7) et en ce que ces cloisons sont agencées de manière à pouvoir coulisser axialement en pénétrant dans la chambre de séparation (9).

4. Dispositif selon la revendication 3, caractérisé en ce que les cloisons séparatrices (18, 19) en forme d'enveloppes cylindriques sont reliées ensemble par des surfaces transporteuses (20) en forme d'hélices et en ce qu'il est prévu un dispositif d'entraînement (28) pour faire tourner les parois séparatrices (18, 19) autour de l'axe vertical (5).

5. Dispositif selon la revendication 3 ou 4, caractérisé en ce qu'il est prévu, pour le coulissement axial des cloisons séparatrices (18, 19), un dispositif d'entraînement séparé (45), associé à une vis-mère.

6. Dispositif selon une des revendications 3 à 5, caractérisé en ce que la paroi (7) entourant la chambre de séparation (9) est en forme de cloche et est disposée au dessus des cloisons séparatrices (18, 19), et en ce que ces cloisons séparatrices (18, 19) sont entourées d'une enveloppe (17) constituant un boîtier qui se raccorde à la paroi (7).

7. Dispositif selon la revendication 6, caractérisé en ce que l'enveloppe (17) constituant un boîtier est montée sur une plaque de base (3) s'étendant radialement et en ce que ladite plaque de base (3) présente des sections fixes (30) des cloisons séparatrices, ainsi que des ouvertures de soutirage (35, 36, 37) pour les constituants séparés du mélange de solides et de liquide.

8. Dispositif selon la revendication 6 ou 7, caractérisé en ce que le tube central d'alimentation (13) est monté pour coulisser axialement dans la paroi (7) en forme de cloche.

9. Dispositif selon une des revendications 3 à 8, caractérisé en ce que le dispositif d'entraînement (28) pour la rotation des cloisons séparatrices (18, 19) est réversible.

10. Dispositif selon une des revendications 3 à 9, caractérisé en ce que les cloisons séparatrices (18, 19) présentent, sur leur extrémité dirigée vers la chambre de séparation (9), un arête aiguë, ou bien sont munies d'un dispositif coupant.

11. Dispositif selon la revendication 10, caractérisé en ce que le dispositif coupant est denté.